# EUROPEAN PATENT APPLICATION

(11) **EP 4 715 810 A1**
(43) Date of publication of application: **25.03.2026**
(21) Application number: 25202979.8
(22) Date of filing: 18.09.2025
(51) Int. Cl.: G10L 15/22, B60R 16/037, G06F 3/16

(54) **A GENERATIVE AI PROCESSING METHOD AND SYSTEM AND CORRESPONDING VEHICLE**

(30) Priority: 20.09.2024 CN 202411314627
(71) Applicant: Bayerische Motoren Werke Aktiengesellschaft, 80809 München (DE)
(72) Inventor: Demelt, Achim, 89231 Neu-Ulm (DE)

(57) **Abstract**

The present invention provides a generative AI processing method and system for a vehicle, the method comprising: establishing a connection between the vehicle and a mobile device; receiving a speech input from a user in response to triggering an in-vehicle speech assistant; and feeding the speech input into an AI model built-in at the mobile device to obtain an AI-generated result. Additionally, the present invention also provides a vehicle supporting generative AI processing.

## Description

### FIELD OF THE INVENTION

The present disclosure relates to the field of artificial intelligence, and in particular, to a generative AI processing method and system.

### BACKGROUND OF THE INVENTION

In recent years, with the development of intelligent vehicles and artificial intelligence technology, a virtual role of intelligent personal assistant (IPA) is usually equipped at the vehicle-end. The drivers or passengers may ask questions or provide instructions to the IPA, for example, through speech. The IPA may, for example, give answers or control the vehicle to perform related operations based on AI language models.

However, current use of AI models to process generative AI tasks at the vehicle-end will be limited by hardware capabilities, costs, etc., while processing generative AI tasks at the cloud may have problems such as data privacy leakage, high costs, etc.

Therefore, it is desirable to provide a generative AI processing method and system, which enables the powerful computing power of smart devices to be used to process generative AI tasks received by the vehicle-end, so that the intelligence and personalization of the vehicle can be further improved without updating the vehicle hardware, and the user experience can be improved.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used to assist in determining the scope of the claimed subject matter.

In accordance with a first aspect of the present disclosure, a generative AI processing method for a vehicle is provided, the method comprising: establishing a connection between the vehicle and a mobile device; receiving a speech input from a user in response to triggering an in-vehicle speech assistant of the vehicle; and feeding the speech input into an AI model built-in at the mobile device to obtain an AI-generated result.

In the technical solution of the embodiments of the present invention, by establishing a connection between a vehicle and a mobile device, feeding the received speech input into an AI model built-in at the mobile device for processing so as to obtain an AI-generated result, the intelligence and personalization of the vehicle can be further improved without updating the vehicle hardware, the user experience can be improved, and problems such as data privacy leakage and network delay when processing generative AI tasks at the cloud can be avoided.

In accordance with an embodiment of the present disclosure, the method further comprises: obtaining vehicle context information regarding an internal or external environment of the vehicle; and feeding the speech input in combination with the vehicle context information into the AI model to obtain the AI generated result.

Therefore, by further combining the vehicle context information to process generative AI tasks, the AI model can integrate the environmental information of the vehicle (for example, whether the driver is alone in the vehicle, etc.) into the answer when processing related tasks, thereby obtaining more personalized and intelligent AI generated results, further improving the user experience.

In accordance with a further embodiment of the present disclosure, the vehicle context information comprises one or more of image or video information about an internal or external environment of the vehicle, location information of the vehicle, navigation information, weather information, and road condition information.

In accordance with a further embodiment of the present disclosure, feeding the speech input into the AI model built-in at the mobile device to obtain the AI-generated result alternatively comprises: performing speech recognition on the speech input at the vehicle-end to obtain a corresponding text; and feeding the obtained text into the AI model built-in at the mobile device to obtain the AI-generated result.

In accordance with a further embodiment of the present disclosure, the method further comprises: performing voiceprint recognition on the speech input to determine an identity of the user; obtaining a user profile corresponding to the user based on the determined identity; determining user preferences for the user based on the obtained user profile; and feeding the speech input in combination with the user preferences into the AI model to obtain the AI-generated result.

In accordance with a further embodiment of the present disclosure, establishing the connection between the vehicle and the mobile device further comprises: confirming whether the vehicle and the mobile device have been paired; if so, automatically establishing the connection between the vehicle and the mobile device; if not, performing following operations: pairing the vehicle with the mobile device; prompting the mobile device to download and install an application connected to the in-vehicle speech assistant of the vehicle; performing related connection settings after the mobile device installs the application to establish the connection between the vehicle and the mobile device.

In accordance with a further embodiment of the present disclosure, the method further comprises: in the case that the result can be generated, transmitting the result back to a head unit of the vehicle for further processing.

In accordance with a further embodiment of the present disclosure, wherein the further processing comprises: displaying or audio broadcasting to the user; or obtaining instructions contained in the result for the vehicle to perform corresponding functions.

In accordance with a further embodiment of the present disclosure, the method further comprises: in the case that the result cannot be generated, feeding the speech input or text into a backend for offboard processing.

In accordance with a second aspect of the present disclosure, a generative AI processing system for a vehicle is provided, the system comprising: a communication module configured to establish a connection between the vehicle and a mobile device; a data obtainment module configured to receive a speech input from a user in response to triggering an in-vehicle speech assistant of the vehicle; and an AI processing module configured to feed the speech input into an AI model built-in at the mobile device to obtain an AI-generated result.

In the technical solution of the embodiments of the present invention, in order to handle the generative AI tasks at the vehicle-end, the powerful computing power of the high-performance mobile device (for example, a smartphone) can be utilized. By transmitting speech or text data received by the vehicle to the paired mobile device, and using the built-in AI model of the mobile device to perform data processing, personalized generated content (or service suggestions, etc.) can be obtained, thereby avoiding data privacy leakage and network delay of cloud services without being limited by the hardware capability of the vehicle, and further improving the personalization and intelligence of IPA.

In accordance with an embodiment of the present disclosure, the data obtainment module is further configured to obtain vehicle context information regarding an internal or external environment of the vehicle, and the AI processing module is further configured to feed the speech input in combination with the vehicle context information into the AI model to obtain the AI generated result.

In accordance with a further embodiment of the present disclosure, the vehicle context information comprises one or more of image or video information about an internal or external environment of the vehicle, location information of the vehicle, navigation information, weather information, and road condition information.

In accordance with a further embodiment of the present disclosure, the system further comprises a speech recognition module configured to perform speech recognition on the speech input at the vehicle-end to obtain a corresponding text; and the AI processing module is alternatively configured to feed the obtained text into the AI model built-in at the mobile device to obtain the AI-generated result.

In accordance with a further embodiment of the present disclosure, the communication module is further configured to: in the case that the result can be generated, transmit the result back to a head unit of the vehicle for displaying or audio broadcasting to the user or for obtaining instructions contained in the result for the vehicle to perform corresponding functions; or in the case that the result cannot be generated, feed the speech input or text into a backend for offboard processing.

In accordance with a third aspect of the present disclosure, a vehicle that supports generative AI processing is provided, the vehicle comprising: a sensor system for collecting vehicle context information regarding an internal or external environment of the vehicle; a speech system for collecting speech input from a user; a communication system for establishing a connection between the vehicle and a mobile device; and a head unit for obtaining and transmitting the speech input or text converted from the speech input and the vehicle context information to the mobile device for processing by an AI model built-in at the mobile device to obtain an AI-generated result.

These and other features and advantages will become apparent by reading the following detailed description with reference to the associated drawings. It should be appreciated that the foregoing general description and the following detailed description are illustrative only and do not limit the claimed aspects.

### BRIEF DESCRIPTION OF THE DRAWINGS

In order to be able to understand in detail the manner employed by the above-described features of the present disclosure, the contents briefly summarized above can be detailed described with reference to various embodiments, with some aspects illustrated in the accompanying drawings. It should be noted however that the drawings illustrate only certain typical aspects of the present disclosure and therefore should not be considered as limiting its scope since the description may allow for other equally valid aspects.
Figure 1 shows a schematic architectural diagram of a generative AI processing system for a vehicle in accordance with an embodiment of the present disclosure.
Figure 2 shows a schematic diagram of a scenario in which a generative AI task is processed in combination with vehicle context information to obtain a more intelligent result in accordance with an embodiment of the present invention.
Figure 3 shows a schematic flowchart of a generative AI processing method for a vehicle in accordance with an embodiment of the present invention.
Figure 4 shows an exemplary vehicle that supports generative AI processing in accordance with an embodiment of the present invention.
Figure 5 shows a schematic architecture diagram of a generative AI processing system for a vehicle in accordance with an embodiment of the present disclosure.

### DETAILED DESCRIPTION

The present disclosure is described in detail below in conjunction with the accompanying drawings and features of the disclosure will be further apparent in the following specific description. The term "vehicle" as used throughout the specification refers to any type of cars, including but not limited to sedans, wagons, trucks, buses, etc. For simplicity, the present invention is described with respect to "automobile". The term "A or B" as used in the specification refers to "A and B" and "A or B" and does not mean that A and B are exclusive unless otherwise indicated.

Current in-vehicle IPAs can use AI models to handle generative AI tasks. However, currently, data or text is typically sent to the cloud for processing or is processed at the vehicle-end using existing AI models. In the case of cloud processing, powerful large language models can be implemented, but this introduces latency (due to network communication), high cloud computing costs, and privacy concerns related to the transmission of personal information. On the other hand, when introducing AI models into vehicles, they may be constrained by the preinstalled hardware (CPU, RAM, NPU, etc.) in various ECUs. These ECUs have been costoptimized for their original purposes (such as infotainment systems, ADAS, etc.) and are typically fully occupied by their standard computational workloads. Introducing AI model execution or other CPU/NPU/RAM-intensive tasks into vehicles either requires additional dedicated ECUs or waiting for the design of next-generation ECUs, which makes it impossible to introduce them directly or costly.

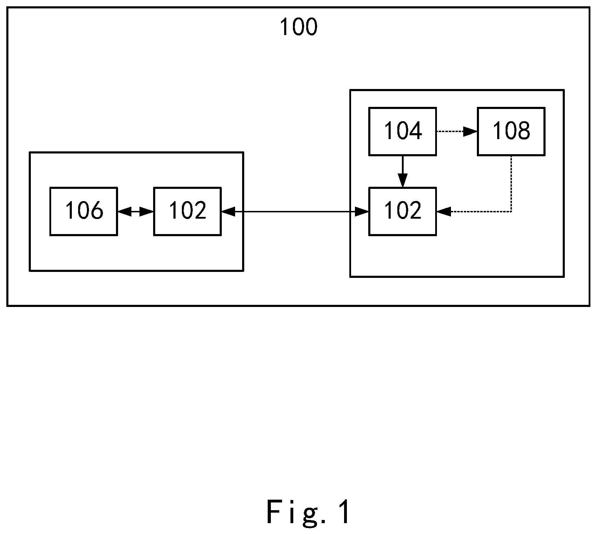

To address the above issues, considering the currently widely used in-vehicle connectivity technology, the present application utilizes the powerful computing capability of a high-performance mobile device (e.g., a smartphone equipped with an AI chip/NPU) that establishes a connection with a vehicle (via Bluetooth, Wi-Fi, etc.) to process generative AI tasks received by the vehicle, thereby avoiding the aforementioned issues of high cost, data privacy leakage, and communication delay. The following provides a more detailed description of the solution to the generative AI processing issues mentioned above, with reference to Figures 1-5.

FIG. 1 is a schematic architectural diagram of a generative AI processing system 100 in accordance with an embodiment of the present disclosure. As shown in FIG. 1, the system 100 may include at least a communication module 102, a data obtainment module 104, an AI processing module 106, and the system 100 may preferably further include a speech recognition module 108.

The communication module 102 may be configured to establish a connection between a vehicle and a mobile device. The communication module 102 may establish a communication connection between the vehicle-side system and the mobile device through a wireless communication module in a head unit system and a protocol thereof, such as a Bluetooth communication module (such as low-power Bluetooth, BLE), a wireless intelligent distribution network communication module (Wi-Fi Smart Config), a wireless carrier communication module (UBW), and the like. The mobile device may include, for example, a smartphone, a smart watch, and the like.

In one embodiment, a user enters the vehicle and uses the Bluetooth function of the mobile device to pair the mobile device with the communication module 102. The user may turn on the Bluetooth function of the mobile device, select to pair the mobile device with the corresponding Bluetooth and establish a Bluetooth connection according to the guidance of the head unit, and then the head unit may prompt the mobile device to download and install an application connected to the in-vehicle speech assistant of the head unit, and perform relevant connection settings after the mobile device installs the corresponding application to complete the application-related communication connection. The above pairing process only needs to be performed once, that is, after the first pairing is completed, the user enters the vehicle again subsequently, and the communication connection of the mobile device with the in-vehicle speech assistant application of the vehicle-side system communication module 102 is automatically established. In one embodiment, the above application may be implemented as, for example, a separate App or an extension of an existing App at the mobile device-end.

The data obtainment module 104 may be configured to receive a speech input from a user in response to triggering an in-vehicle speech assistant of the vehicle.

In one embodiment, microphones or microphone arrays built in the vehicle may collect speech input from a speaker in the vehicle at a certain frequency, and then, when a preset trigger word (e.g., hello, XXX) is recognized in the speech input, an in-vehicle speech assistant of the vehicle may be triggered. Recognition of the above trigger word may be performed, for example, by a speech wake-up model (e.g., based on a neural network, template matching, etc.). In another embodiment, an in-vehicle speech assistant of the vehicle may be triggered by a speech input button provided in the vehicle (e.g., on a steering wheel).

In the case that the in-vehicle speech assistant is triggered, a speech segment within a predefined time period (e.g., 10 s) may be recorded and saved for subsequent processing. For example, the above-described speech segment may be directly transmitted to the mobile device for processing, or may be converted into text after speech recognition by the speech recognition module 108 at the vehicle-end, and then the converted text may be transmitted to the mobile device for processing.

In the case that speech recognition on the received speech segment (or speech input) is performed at the vehicle-end using the speech recognition module 108, a hidden Markov model or an "end-to-end" method based on a deep neural network may be employed, for example, in which the speech input is encoded as a feature vector and then decoded based on an acoustic or language model to obtain a corresponding text output.

Further, the speech recognition module 108 may also perform voiceprint recognition on the received speech input to determine an identity of the user, obtain a user profile corresponding to the user based on the determined identity, and determine user preferences (e.g., frequently navigated destination, etc.) based on the obtained user profile. The above-described user preferences may, for example, be subsequently fed into an AI model to obtain more personalized results (e.g., recommendations for frequent restaurant types, etc. when making restaurant recommendations).

Further, the data obtainment module 104 may obtain vehicle context information regarding an internal or external environment of the vehicle.

In one embodiment, the vehicle context information may include, but is not limited to, image or video information about an internal or external environment of the vehicle, location information of the current vehicle, navigation information, weather information, and road condition information.

The AI processing module 106 may be configured to feed the user speech input or text converted from the speech into an AI model built-in at the mobile device to obtain an AI-generated result.

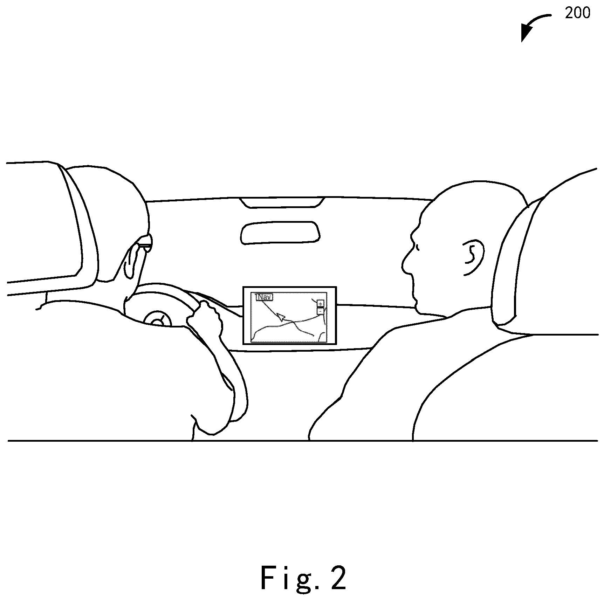

In a further embodiment, the AI processing module 106 may be configured to feed the user speech input or text converted from the speech in combination with the vehicle context information or user preferences into the AI model to obtain the AI generated result, as further described below with reference to the scenario of FIG. 2.

In one embodiment, the above-described AI model may be trained based on machine learning or deep learning. It can be understood that the above-described AI model may be any suitable type of model (e.g., a convolutional neural network, etc.) for processing generative AI tasks.

Subsequently, in a case where the above result can be generated (i.e., if the prompt word can be answered), the result can be transmitted back to the head unit of the vehicle for further processing (e.g., displaying or audio broadcasting to the user, or obtaining instructions (e.g., navigation instructions) contained in the result for the vehicle to perform corresponding functions (e.g., to display navigation routes on the vehicle screen)).

Instead, in the case that the result cannot be generated (i.e., the device's built-in AI model cannot handle the task), the user speech input or the converted text can be fed into the back end for offboard processing.

Those skilled in the art will appreciate that the system and its modules of the present disclosure may be implemented in hardware or software, and the modules may be merged or combined in any suitable manner.

FIG. 2 shows a schematic diagram of a scenario 200 in which a generative AI task is processed in combination with vehicle context information to obtain a more intelligent result in accordance with an embodiment of the present invention. As shown in scenario 200 of FIG. 2, a user wakes up an AI speech assistant while driving by, for example, pressing a button on a steering wheel, and makes a request, for example, " Recommend a nearby restaurant for me." The system 100 receives a speech input of the user, and simultaneously obtains the current context information inside and outside the vehicle (for example, the current wiper is in a working state, the current weather information is moderate rain, the road condition information is congestion on a nearby highway, and the camera in the vehicle captures images of a plurality of occupants and pets in the vehicle). Subsequently, the system 100 sends the above-mentioned user speech input and context information to the AI model built-in at the mobile device, and the generated result after AI model processing is transmitted back to the head unit and displayed and broadcasted to the user (the content of the display is, for example, that the following is a list of restaurants found for you. The restaurants in the list are located indoors of pet-friendly shopping malls to avoid rainy weather, and the restaurants whose navigation routes do not pass through the highway are filtered according to the road conditions. Finally, restaurants are sorted by rating and displayed to the user, or, as shown in FIG. 2, the navigation route to the recommended restaurant is directly displayed).

Therefore, by combining the context content such as the current weather information, road condition information, images of occupants in the vehicle, the system can more accurately judge the user's intentions and needs, thereby providing more personalized services, which further enhances the intelligence and personalization of the vehicle and improves the user experience.

It can be understood that the above-described scenarios are provided only as examples, and the AI model generates results that satisfy user's usage scenarios with different complexity levels according to different context information and user input.

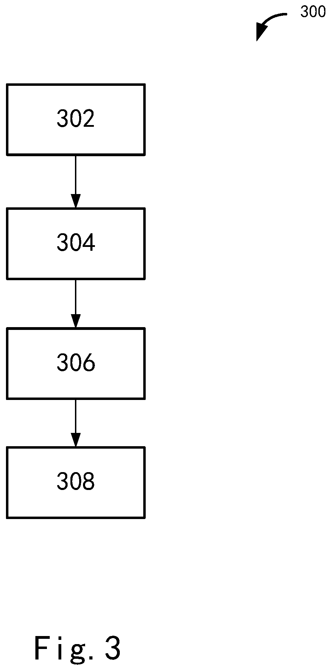

FIG. 3 shows a schematic flowchart of a generative AI processing method 300 for a vehicle in accordance with an embodiment of the present invention.

The method 300 begins at step 302 where the communication module 102 may establish a connection between the vehicle and a mobile device.

In one embodiment, establishing the connection between the vehicle and the mobile device requires confirming whether the vehicle and the mobile device have been paired; If so, the connection between the vehicle and the mobile device is automatically established; If not, the following operations are performed: pairing the vehicle with the mobile device, prompting the mobile device to download and install an application connected to the in-vehicle speech assistant of the vehicle, and performing related connection settings after the mobile device installs the application to establish the application-related communication connection between the vehicle and the mobile device.

At step 304, the data obtainment module 104 may receive a speech input from a user in response to triggering an in-vehicle speech assistant of the vehicle.

In one example, the above-described speech input may be converted into text at the vehicle via speech recognition and output to the mobile device.

In another example, voiceprint recognition may also be performed on the aforementioned speech input to determine an identity of the user, a user profile corresponding to the user is obtained based on the determined identity, and user preferences of the user may then be determined based on the obtained user profile. These user preferences can be sent together to the mobile device for integration into the AI-generated answers.

In a further embodiment, the data obtainment module 102 may also obtain vehicle context information regarding an internal or external environment of the vehicle. For example, the vehicle context information may include one or more of image or video information about an internal or external environment of the vehicle, location information of the vehicle, navigation information, weather information, and road condition information.

At step 306, the AI processing module 106 may feed the speech input or speechconverted text into an AI model built-in at the mobile device to obtain an AI-generated result.

Preferably, the AI processing module 106 may feed the speech input or speechconverted text into the AI model in combination with the vehicle context information or user preferences to obtain the AI generated result.

At step 308, in the case that the result can be generated, the result can be transmitted back to a head unit of the vehicle for further processing, e.g., for displaying or audio broadcasting to the user or for obtaining instructions contained in the result for the vehicle to perform corresponding functions. Instead, in the case that the result cannot be generated, the speech input or the converted text may be fed into a backend for offboard processing.

Therefore, by establishing a connection between the vehicle and the mobile device, and feeding the received speech input into an AI model built-in at the mobile device to obtain an AI-generated result, the intelligence and personalization of the vehicle can be further enhanced without updating the vehicle hardware and without cloud services, and the user experience can be improved. In addition, vehicle context information and user preference information can be further integrated into AI-generated answers to obtain more personalized answers that better meet user needs.

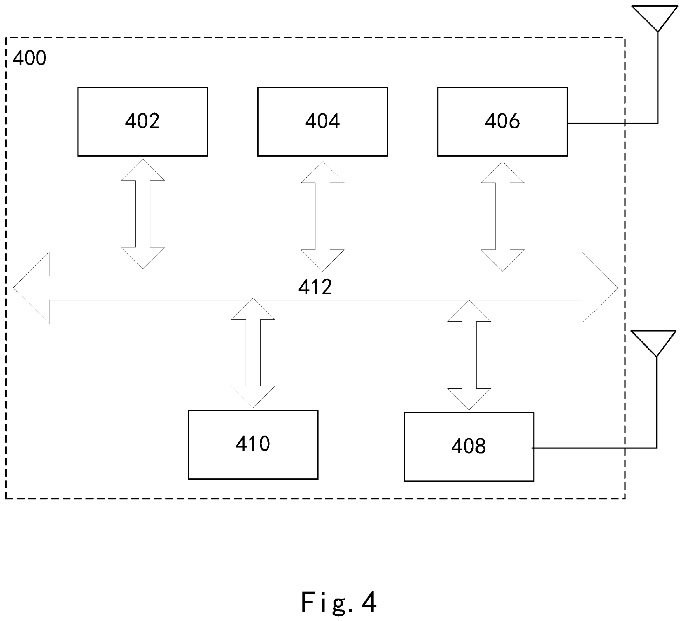

FIG.4 shows an exemplary vehicle 400 that supports generative AI processing in accordance with an embodiment of the present invention. The vehicle 400 may include various software and hardware components connected via a bus 412.

The vehicle 400 may include at least a sensor system 402, a speech system 404, a communication system 406, a positioning system 408, and a head unit 410.

The sensor system 402 may be used to collect vehicle context information regarding an internal or external environment of the vehicle. The sensor system 402 may include any suitable number of accelerometers, gyroscopes, and/or magnetometers. In some embodiments, the sensor system 402 may be part of an inertial measurement unit of the vehicle 400. The sensor system 402 may be used to provide and/or verify motion and direction information, monitor wheel and driveline performance, and/or measure oscillation amplitude and frequency of the vehicle 400 and/or components of the vehicle 400. As an example, the accelerometer may measure vibration of the vehicle 400, such as movement or mechanical oscillation for balanced positioning around components of the vehicle 400. In one embodiment, the gyroscope and magnetometer of the sensor system 402 may be used to measure the rotational state and orientation of the vehicle relative to the magnetic north, respectively, and to measure and calibrate an estimate and/or model of the turning radius at the current speed and/or maneuverability measurements at the current speed (especially when used in conjunction with measurements from other external and internal sensors, such as other sensors such as speed sensors, wheel tick sensors, and/or odometer measurements). In addition, the sensor system 402 may also include radar, LIDAR, vision sensors, and the like. For example, a vision sensor may be disposed inside or outside the vehicle to capture images of the environment inside or outside the vehicle.

The speech system 404 may include, for example, microphones or microphone arrays disposed in the vehicle, which may be used to collect speech input from a user when, for example, a speech assistant of the vehicle is triggered.

The communication system 406 may be used to establish a connection between the vehicle and a mobile device. For example, the communication system 406 may be configured to transmit and receive data messages and elements via a short-range wireless communication protocol (e.g., Bluetooth^{®} , Bluetooth low energy^{®} etc.) and/or via a local area network and/or a wide area network, and/or via a cellular network, and/or via any suitable wireless network. Of course, it should be understood that these are merely examples of networks that may be utilized by the vehicle 400 over a wireless link, and the claimed subject matter is not limited in this respect. In one embodiment, the communication system 406 may include various combinations of WAN, WLAN, and/or PAN transceivers. In one embodiment, the communication system 406 may also include a Bluetooth transceiver, a ZigBee transceiver, or other PAN transceiver.

The positioning system 408 may be used to collect location data of the vehicle. In some cases, the positioning system 408 may be implemented as a GNSS receiver, which may be configured to receive and digitally process signals from navigation satellites (and/or other vehicles) in order to provide positioning, speed, and time of the receiver. The GNSS receiver may include hardware and/or software components. In one embodiment, GNSS signals from GNSS satellites received by GNSS receivers are used by the vehicle 400 for location determination and/or for determination of GNSS signal parameters and demodulated data. In one embodiment, the signals received by the wireless transceiver are used for location determination alone or in combination with the GNSS signals received by the GNSS receiver.

The head unit 410 may be an integrated in-vehicle information processing system formed by using an in-vehicle dedicated central processing unit based on a vehicle body bus system and Internet services. It may include an in-vehicle information system and an in-vehicle entertainment system, and its functions are mainly divided into navigation and positioning, vehicle services, multimedia, news communication, life services, etc., and are important components of cockpit electronics. The head unit 408 may be used to obtain and transmit speech input or text converted from the speech input as well as vehicle context information or user preference information to the mobile device for processing by an AI model built-in at the mobile device to obtain an AI generated result.

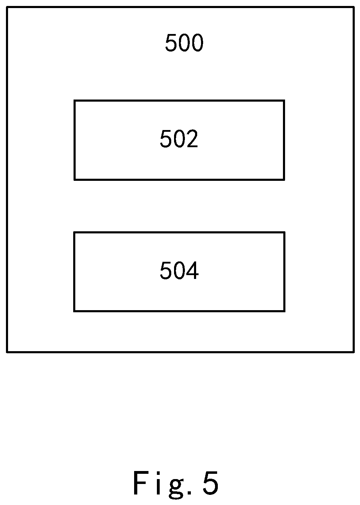

FIG. 5 shows a schematic architecture diagram of a generative AI processing system 500 for a vehicle in accordance with an embodiment of the present disclosure. As shown in FIG. 5, the system 500 may include a memory 502 and at least one processor 504. The memory 502 may include RAM, ROM, or a combination thereof. The memory 502 may store computerexecutable instructions that, when executed by the at least one processor 504, cause the at least one processor 504 to perform various functions described herein, including: establishing a connection between the vehicle and a mobile device; receiving a speech input from a user in response to triggering an in-vehicle speech assistant of the vehicle; and feeding the speech input (preferably in combination with vehicle context information or user preferences) into an AI model built-in at the mobile device to obtain an AI-generated result. In some cases, the memory 502 may in particular include a BIOS that may control basic hardware or software operations such as interactions with peripheral components or devices. The processor 504 may include an intelligent hardware device (e.g., a general purpose processor, a DSP, a CPU, a microcontroller, an ASIC, an FPGA, a programmable logic device, a discrete gate or transistor logic component, a discrete hardware component, or any combination thereof).

The functions described herein may be implemented in hardware, software executed by a processor, firmware or any combination thereof. If implemented in software executed by a processor, the functions may be stored as one or more instructions or codes on a computer-readable medium or transferred by the computer-readable medium. Other examples and implementations fall within the scope of the present disclosure and the appended claims. For example, due to the nature of software, the functions described herein may be implemented using software executed by a processor, hardware, firmware, hardwired or any combination thereof. Features that implement the functions may also be physically located in various locations including being distributed so that portions of the function are implemented at different physical locations.

The content already described above includes examples of various aspects of the claimed subject matter. Of course, it is not possible to describe every conceivable combination of components or methods for the purpose of depicting the claimed subject matter, but one of ordinary skill in the art will recognize that many further combinations and arrangements of the claimed subject matter are possible. Thus, the disclosed subject matter is intended to cover all such alterations modifications and variations falling within the spirit and scope of the appended claims.

## Claims

1. A generative AI processing method for a vehicle, the method comprising:
establishing a connection between the vehicle and a mobile device;
receiving a speech input from a user in response to triggering an in-vehicle speech assistant of the vehicle; and
feeding the speech input into an AI model built-in at the mobile device to obtain an AI-generated result.

2. The method of claim 1, further comprising:
obtaining vehicle context information regarding an internal or external environment of the vehicle; and
feeding the speech input in combination with the vehicle context information into the AI model to obtain the AI generated result.

3. The method of claim 2, wherein the vehicle context information comprises one or more of image or video information about an internal or external environment of the vehicle, location information of the vehicle, navigation information, weather information, and road condition information.

4. The method of claim 1, wherein feeding the speech input into the AI model built-in at the mobile device to obtain the AI-generated result alternatively comprises:
performing speech recognition on the speech input at the vehicle-end to obtain corresponding text; and
feeding the obtained text into the AI model built-in at the mobile device to obtain the AI-generated result.

5. The method of claim 1, further comprising:
performing voiceprint recognition on the speech input to determine an identity of the user;
obtaining a user profile corresponding to the user based on the determined identity;
determining user preferences for the user based on the obtained user profile; and
feeding the speech input in combination with the user preferences into the AI model to obtain the AI-generated result.

6. The method of claim 1, wherein establishing the connection between the vehicle and the mobile device further comprises:
confirming whether the vehicle and the mobile device have been paired;
if so, automatically establishing the connection between the vehicle and the mobile device;
if not:
pairing the vehicle with the mobile device;
prompting the mobile device to download and install an application connected to the in-vehicle speech assistant of the vehicle;
performing related connection settings after the mobile device installs the application to establish the connection between the vehicle and the mobile device.

7. The method of claim 1, further comprising:
in the case that the result can be generated, transmitting the result back to a head unit of the vehicle for further processing.

8. The method of claim 7, wherein the further processing comprises:
displaying or audio broadcasting to the user; or
obtaining instructions contained in the result for the vehicle to perform corresponding functions.

9. The method of claim 1 or 4, further comprising:
in the case that the result cannot be generated, feeding the speech input or text into backend for offboard processing.

10. A generative AI processing system for a vehicle, the system comprising:
a communication module configured to establish a connection between the vehicle and a mobile device;
a data obtainment module configured to receive a speech input from a user in response to triggering an in-vehicle speech assistant of the vehicle; and
an AI processing module configured to feed the speech input into an AI model built-in at the mobile device to obtain an AI-generated result.

11. The system of claim 10, wherein
the data obtainment module is further configured to obtain vehicle context information regarding an internal or external environment of the vehicle, and
the AI processing module is further configured to feed the speech input in combination with the vehicle context information into the AI model to obtain the AI generated result.

12. The system of claim 11, wherein the vehicle context information comprises one or more of image or video information about an internal or external environment of the vehicle, location information of the vehicle, navigation information, weather information, and road condition information.

13. The system of claim 10, further comprising a speech recognition module configured to perform speech recognition on the speech input at the vehicle-end to obtain corresponding text; and
wherein the AI processing module is alternatively configured to feed the obtained text into the AI model built-in at the mobile device to obtain the AI-generated result.

14. The system of claim 10 or 13, wherein the communication module is further configured to:
in the case that the result can be generated, transmit the result back to a head unit of the vehicle for displaying or audio broadcasting to the user or for obtaining instructions contained in the result for the vehicle to perform corresponding functions; or
in the case that the result cannot be generated, feed the speech input or text into backend for offboard processing.

15. A vehicle that supports generative AI processing, the vehicle comprising:
a sensor system for collecting vehicle context information regarding an internal or external environment of the vehicle;
a speech system for collecting speech input from a user;
a communication system for establishing a connection between the vehicle and a mobile device; and
a head unit for obtaining and transmitting the speech input or text converted from the speech input and the vehicle context information to the mobile device for processing by an AI model built-in at the mobile device to obtain an AI-generated result.
